(19) Europäisches Patentamt
European Patent Office
Office européen des brevets

(11) **EP 3 011 870 A1**

(12) # EUROPEAN PATENT APPLICATION
published in accordance with Art. 153(4) EPC

(43) Date of publication:
**27.04.2016 Bulletin 2016/17**

(51) Int Cl.:
***A47C 7/18*** *(2006.01)*     ***A47C 27/14*** *(2006.01)*

(21) Application number: **14814150.0**

(86) International application number:
**PCT/JP2014/066025**

(22) Date of filing: **17.06.2014**

(87) International publication number:
**WO 2014/203890 (24.12.2014 Gazette 2014/52)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **18.06.2013 JP 2013127510**
            **28.03.2014 JP 2014068948**

(71) Applicants:
• **Toyo Seat Co., Ltd.**
**Osaka-shi,**
**Osaka 530-0047 (JP)**
• **JSP Corporation**
**Chiyoda-ku, Tokyo 100-0005 (JP)**

(72) Inventors:
• **ITO, Hiroyuki**
**Aki-gun**
**Hiroshima 736-0002 (JP)**
• **MURATA, Seishiro**
**Tokyo 100-0005 (JP)**
• **SHIOYA, Satoru**
**Kanuma-shi**
**Tochigi 322-0014 (JP)**
• **IMAI, Takashi**
**Takehara-shi**
**Hiroshima 725-0004 (JP)**

(74) Representative: **Fragnaud, Aude**
**A.P.I. Conseil**
**Technopole Hélioparc**
**2 Avenue Pierre Angot**
**64053 Pau Cedex 9 (FR)**

(54) **SEAT CUSHION**

(57) The object of the present invention is to provide a seat cushion for vehicles which is excellent in recyclability, fitting feeling and cushioning properties when an occupant is seated.

A plurality of independent rod-like or plate-like supporting bodies are constructed by a synthetic resin foam having a bending deflection amount equal to or larger than 20 mm and a load between 2 and 100 N at the 20 mm bending deflection time, a seat cushion pad is structured such as to be mounted, fitted or fixedly provided in the edge-like member or be integrally formed with the edge-like member so as to be supported at one point or a plurality of points in a direction of bridging between the edge-like members, a plurality of supporting bodies 3 are structured such as to be lined up at predetermined intervals.

*FIG. 1*

**Description**

**Technical Field**

The present invention relates to a weight reduction of a seat cushion for vehicles, and particularly relates to the seat cushion characterized in that the seat cushion is excellent in recyclability, fitting feeling, and cushioning properties.

**Background Art**

The seat cushion generally included a metal seat frame or wire, and employed a polyurethane foam generally as a cushion material, and had an entire surface thereof be covered with a vehicle seat cover material. A body weight of an occupant was supported mainly by deflecting a polyurethane foam layer interposed between a seat frame or a wire and the vehicle seat cover material in a compression direction. Cushioning properties and fitting properties were obtained mainly by a reaction force, a restoring force and a deflection when the polyurethane foam layer was deflected in a compression direction.

Further, as a technique relating to the weight reduction of the seat cushion, patent document 1 describes a technique that a seat frame exhibit a frame structure, a cross section of the seat frame exhibits a mountain shape, an inclined surface facing to a seated person is provided by forming one side of the mountain shape in an inner peripheral side of the frame shape of the seat frame, the seat frame is covered with a net having an elasticity, a peripheral edge portion of the net is provided in a tension manner so as to form a seating surface having a concave curve surface shape by being taken around from the mountain shape of the seat frame and fixed to the other side of the mountain shape, and an angle is provided between the net and the inclined surface of the seat frame.

As the other technique relating to the weight reduction, patent document 2 describes a technique relating to a seat for vehicles having a seating portion provided with a base plate which is arranged on a seat frame in an attachable and detachable manner, a block which is arranged on the base plate, a spring plate which is arranged on the block, and a vehicle seat cover which covers the spring plate. The block is arranged so as to form a predetermined space between the base plate and the spring plate. The spring plate is formed by a foam which has an elasticity and is made of any of a PP (polypropylene) bead foam, a PE (polyethylene) bead foam, a PP foam, a PE foam, an AS resin (acrylonitrile-styrene copolymer) foam, an EVA (ethylene-vinyl acetate copolymer), and a polyurethane foam material. The spring plate is deflected into the predetermined space when force in a direction toward the base plate is applied.

**Prior Art Document**

**Patent Documents**

Patent Document 1: Japanese Patent Unexamined Publication No. 2002-28044

Patent Document 2: Japanese Patent No. 4009490

**Summary of the Invention**

**Problem to be Solved by the Invention**

In the conventional general seat cushion, the polyurethane foam has been used as a cushion material. Since the polyurethane foam is extremely high in cushioning properties and excellent in comfort, the polyurethane foam has still been used frequently. However, there has been a problem that the polyurethane foam is inferior in recyclability. Further, the seat cushion has been required to have not only general cushioning properties but also a function of supporting a body of an occupant at an optimal position in relation to acceleration in longitudinal and lateral directions applied to the occupant with movement of a vehicle. It has been necessary to support the body at an optimal position for reducing tiredness due to long-time riding. The function can not be satisfied only by the very light and soft polyurethane foam, it is necessary to make a density of the polyurethane foam equal to or more than a certain density for obtaining a certain level of rigidity. Therefore, there has been a problem that the weight reduction does not promote.

In the technique described in the patent document 1, a net material for supporting a load of an occupant has been drawn in the seat frame which is arranged around the seat cushion and securely fixed thereto, and the load applied by the seating of the occupant has finally been supported by rigidity of the seat frame through the net material. Therefore, the structure of the seat frame has needed to have a certain strength or higher. As a result, there has been a problem that the weight of the seat frame tends to be increased and the weight reduction effect as a whole is not sufficient in spite of the light weight of the net material itself which corresponds to the conventional cushion material, the weight of the seat frame tends to be increased.

Further, the cushioning properties of the net material have been obtained mainly by elongation of the material, and therefore limited. A slack has occurred due to long-time use, which has tended to deteriorate marketability. Still further, since the structure has been configured such that a flat net material is extended over the seat frame, the basic form of the seat cushion is flat, and it has been difficult to obtain a three-dimensional shape which is necessary for supporting a body of the occupant at an optimal position. As a result, there has been a problem of making the occupant uncomfortable. This has been because an unstable hammock-form net material could not stably support the body of the occupant when a lateral G has been applied to the occupant due to movement of a vehicle.

Next, in the technique of the patent document 2, the spring plate has been a plate-like foam exhibiting an approximately rectangular shape, and a plurality of grooves have been formed in a lateral direction on the occupant-seated side of the spring plate. However, flexibility could not be provided in the case that the groove portions are shallow. On the other hand, excessive tensile force has been concentrated on a slightly remaining connection part at the bottom of the groove portion and great elongation deformation is generated when the cushion material is deflected, in the case that the groove portions are deep. Therefore, it has been highly possible to cause unrestorable permanent deformation or rupture. If even a part of the connection part at the groove bottom portion is broken, the support has been lost at once and apparent hardness of the entire cushion material has been reduced rapidly, and the function as the cushion material has significantly deteriorated. Therefore, it has been actually difficult to design the deflection of the cushion material to be a certain amount or larger in order to avoid the breakage, and it has been difficult to provide sufficient fitting feeling and comfort at the seating time.

Furthermore, with regard to the technique described in the patent document 2, it has been possible to obtain individually favorable seating feeling by appropriately selecting blocks which are different in height depending upon a body built of an occupant. There has been a problem, however, that an occupant needs to change, before seated, the blocks to ones having a height appropriate to the occupant depending upon lightness or heaviness of his/her weight, which is the operation actually difficult to perform.

Hence the object of the present invention is to provide a seat cushion which is excellent in fitting feeling and cushioning properties when an occupant is seated, can achieve the weight reduction, and is excellent in recyclability.

Means for Solving the Problem

In the present invention, the synthetic resin foam is indicative of a synthetic resin foam molding that is flexible to be deformed by bending and excellent in restoration properties. The bending deflection thereof measured in accordance with the method defined by Japanese Industrial Standards (JIS) K7221-2:2006 (in the atmosphere of 23 °C $\pm$ 2 °C and relative humidity of 50 $\pm$ 5 %, a test specimen whose skin is removed having a length of 350 mm, a width of 100 mm, and a thickness of 25 mm is subjected to a load applied at a test speed 20 $\pm$ 1 mm/min with a distance between supporting points of 300 mm until the deflection reaches 90 mm at the maximum, during which the load deflection curve is recorded) is equal to or larger than 20 mm, and the load when deflected by 20 mm is 2 to 100 N. More specifically, the synthetic resin foam is indicative of a polypropylene foam, a polyethylene foam, other polyolefin resin foams, a modified polystyrene resin foam, or the like. The synthetic resin foam contains a bead foam molding exemplified by a polypropylene bead foam molding, a polyethylene bead foam molding, and the like.

More specifically, one preferable material to be selected is the material whose sample can be restored from deformation by 90 % or higher just after the load is released after a rod-form or plate-form test specimen of the sample having a length of approximately 400 mm is held at both ends thereof while the center of the test specimen of the sample being pressed down about 25 mm by a load for 30 minutes. Alternatively, another preferable material to be selected is the material whose sample has the residual distortion (also referred to as "residual displacement amount") measured to be equal to or smaller than a predetermined amount after the center portion of the sample held at both ends thereof is pressed down repetitively a predetermined number of times and deformed in accordance with the test conventionally performed for the seat cushion made of a polyurethane foam.

As material satisfying such conditions, for example, a polypropylene foam with density of 0.06 $g/cm^3$ to 0.015 $g/cm^3$, and more preferably with density of 0.035 $g/cm^3$ to 0.015 $g/cm^3$, a polyethylene foam with density of 0.08 $g/cm^3$ to 0.03 $g/cm^3$, or the like are preferable. On the other hand, a hard polyurethane foam, a polystyrene foam, and the like, which are poor in flexibility and possibly ruptured easily due to bending deformation, are not favorable.

The present inventors have considered materials to achieve the weight reduction. As an example of the material capable of substituting a polyurethane foam having an open cell structure, the synthetic resin foam generally having a closed cell structure had the advantages of being light, excellent in rigidity, easy to recycle, and the like in comparison with the polyurethane foam conventionally and generally used as a cushion material for a seat cushion. When the deflection and restoring force in a compression direction were used for cushion, however, the reaction force tended to increase rapidly with deformation of the foam due to repulsive force of contained air. The synthetic resin foam is therefore inferior in comfort due to a lack of cushioning properties, which causes hard feeling.

Furthermore, when the synthetic resin foam generally having a closed cell structure was deflected in a compression direction and used as a cushion material, similarly to the polyurethane foam, such a synthetic resin gradually lost restoring force with long-time use, and creep occurred. This was caused mainly by fatigue due to repetitive deformation of a resin film constituting bubbles and reduction of pressure of contained air. The synthetic resin foam was therefore not favorable as material for a seat cushion for vehicles, which is used for a long time.

By analysis of the physical properties of the synthetic resin foam from various viewpoints, the inventors have found that it is optimal to adopt the method using, for a cushion material, the bending deformation and restoration properties of supporting body to be described later made of a synthetic resin foam capable of being deformed by bending and excellent in restoration properties, instead of the structure body, which has been used conventionally as a cushion material, to be deflected in a compression direction, and has achieved the present invention.

In order to solve the problems described in "Problem to be Solved by the Invention", the invention of a seat cushion 1 described in a first aspect is a seat cushion 1 including a seat cushion pad 2, wherein the seat cushion pad 2 is provided with edge-like members 10 which are arranged in a facing manner at a predetermined distance and are formed around an upper edge portion of the seat cushion pad 2, and a plurality of independent rod-like or plate-like supporting bodies 3 which are constructed by a synthetic resin foam having a bending deflection amount equal to or larger than 20 mm and a load between 2 and 100 N at the 20 mm bending deflection time, both the bending deflection amount and the load being measured in accordance with a method described in JIS K7221-2: 2006, the seat cushion pad 2 is structured such as to be mounted, fitted or fixedly provided in the edge-like member 10 or be integrally formed with the edge-like member 10 so as to be supported at one point or a plurality of points in a direction of bridging between the edge-like members 10, a plurality of supporting bodies 3 are structured such as to be lined up at predetermined intervals, and a space portion 5 is provided so that the supporting bodies 3 are allowed to be deformed by bending in a downward direction of the supporting bodies 3.

The invention of a seat cushion 1 described in a second aspect is the invention according to the first aspect, wherein an elastic body 8 is provided so as to be in contact with a bottom surface of the supporting body 3, the supporting body 3 and a seat frame 7 are separated at the no-load time, and the supporting body 3 starts moving downward by deflection of the elastic body 8 when the load is applied by seating of an occupant.

The invention of a seat cushion 1 described in a third aspect is the invention according to the first aspect, wherein an elastic body 8 is provided below the supporting body 3, an end portion of the supporting body 3 and a seat frame 7 are in a connection state at the no-load time, and the supporting body 3 starts bending deformation from the seat frame 7 as a supporting point just after the loading.

The invention of a seat cushion 1 described in a fourth aspect is the invention according to any one of the first to third aspects, wherein the supporting body 3 is formed into a linear shape, a curved shape or a bent shape which is combination of straight line portions which are obtained by bending straight lines at optional angles.

**Effect of the Invention**

In the invention of the seat cushion 1 described in any one of the first to fourth aspects, the polyurethane foam used generally and conventionally can be substituted by the synthetic resin foam, which results in the weight reduction and the improvement in recyclability. Further, in spite of the use of the synthetic resin foam that is relatively hard and inferior in cushioning properties, fitting properties, and creep resistance properties, it is possible to provide the synthetic resin foam with high cushioning properties, high fitting properties, and high degree of freedom of design. The body of the occupant can be therefore supported appropriately, and the high comfort can be obtained. The favorable creep resistance properties equivalent to those of the conventional polyurethane foam are exerted even with long-time use, thereby exerting the effect of high marketability.

Further, the processing costs can be decreased and the weight reduction can be promoted by integrally forming the supporting bodies 3 and other portions, which constitute the seat cushion pad 2, from the synthetic resin foam.

Next, the invention of the seat cushion 1 described in the second aspect has a first mode that the weight of the occupant balances a reaction force in an upward direction of the elastic body 8 generated by downward movement of a whole of the supporting body 3 due to an elastic expansion or an elastic contraction of the elastic body 8 without contact with the seat frame 7, when the occupant seats, and a second mode that the weight of the occupant balances a reaction force in an upward direction generated by downward bending deformation of the supporting body 3 in a both-ends supported state after a whole of the supporting body 3 moves downward due to the elastic expansion or the elastic contraction of the elastic body 8 and the end portions of the supporting body 3 come into contact with the upper portion of the seat frame 7, and the reaction force in the upward direction of the elastic body 8, when the occupant seats.

In the case of the first mode, the downward movement of a whole of the supporting body 3 starts together with the fixed reaction force of the elastic body 8 by the elastic expansion or the elastic contraction of the elastic body 8 by the elastic body 8 supporting the supporting body 3, without contact of a whole of the supporting body 3 made of the synthetic resin foam and forming the seat surface with the seat frame 7, at the same time when the occupant seats. Accordingly, a good seating feeling can be obtained from the seating time. Further, since the supporting body 3 deforms by bending around the elastic body 8 which the supporting body 3 comes into contact with while moving downward, the occupant can get a soft impression and feel a comfortable seating feeling.

Next, in the case of the second mode, the downward movement of a whole of the supporting body 3 together with the fixed reaction force of the elastic body 8 starts by the bending deformation around the elastic body 8 supporting the supporting body 3 and the elastic expansion or the elastic contraction of the elastic body 8 without the contact of the supporting body 3 made of the synthetic resin foam and forming the seat surface with the seat frame 7 in a first stage, at the same time when the occupant seats. Accordingly, the good seating feeling can be obtained from the seating time. Further, the bending deformation supported by both ends while setting the seat frame 7 to a supporting point is generated in a second stage that the end portion of the supporting body 3 comes into contact with the seat frame 7, and the cushioning properties can be achieved in correspondence to the weight of the occupant by the reaction force in the upward direction of the supporting body 3 and the reaction force in the upward direction of the elastic body 8. Then, the occupant can get the impression that the seat surface is sufficiently soft, and feel comfortable cushioning properties.

Further, since the weight of the occupant is applied to the elastic body 8 supporting the supporting body 3 and the load is dispersed into the elastic body 8 and the supporting body 3 in any of the first and second modes, the load applied to the supporting body 3 which is the synthetic resin foam can be reduced. As a result, the supporting body 3 deforms by bending and achieves the cushioning properties when the load is applied by the seating of the occupant, however, a deformation range can be confined to an elastic range. Further, since the downward movement of the elastic body 8 is applied, the occupant gets the impression that the seat surface is sufficiently soft, and can obtain a preferable seating feeling.

Next, the invention of the seat cushion 1 described in the third aspect is a mode that the elastic body 8 is provided below the supporting body 3, that is, so as to be in contact with the bottom surface of the supporting body 3 or be separated below the supporting body 3, and the end portion of the supporting body 3 and the seat frame 7 are in a connection state. In the case of this mode, the supporting body 3 starts deforming by bending around the seat frame 7 just after the load application. The mode that the elastic body 8 is separated from the supporting body 3 at the no-load time is set to a third mode, and the mode that the elastic body 8 is brought into contact with the supporting body 3 is set to a fourth mode.

In the case of the third mode, the supporting body 3 exposed to the pressure generated by a seated person starts deforming by bending downward, a lower side of the supporting body 3 comes into contact with the elastic body 8 after the deformation is a certain magnitude or larger, and the supporting force can be enhanced by the reaction force in the upward direction caused by the bending deformation of the supporting body 3 and the reaction force in the upward direction caused by the tensional force of the elastic body 8 after the contact. As a result, it is possible to prevent the body from excessively sinking and it is possible to support the body of the seated person at an appropriate position.

In the case of the fourth mode, the supporting body 3 and the elastic body 8 exposed to the pressure generated by a seated person starts deforming by bending downward simultaneously, and the supporting force can be enhanced by the reaction force caused by the bending deformation of the supporting body 3 and the tensional force of the elastic body 8. As a result, it is possible to prevent the body from excessively sinking in the case that the weight of the occupant is heavy and it is possible to support the body of the occupant having the heavy weight at an appropriate position.

Furthermore, in the invention of the seat cushion 1 described in the fourth aspect, for a smaller-sized seat cushion disabling a sufficient distance between both ends of the supporting body 3 and a sufficient deflection by a load of a body of an occupant, the substantial distance when the supporting body 3 is deformed by bending can be increased by forming the supporting body 3 in a non-linear shape such as an arc shape or a bent shape formed by combination of straight lines bent with optional angles, which results in the obtainment of sufficient deflection. Therefore, a degree of freedom of design can be enhanced.


**Brief Description of the Drawings**

Fig. 1 is a schematic view of a seat cushion according to the present invention;

Figs. 2A and 2B are schematically explanatory views of a cross section along a line B-B in Fig. 1, in which Fig. 2A is a schematically explanatory view of a mode that a supporting body is separated from an edge-like member forming a periphery of an upper edge portion in a seat cushion pad having a bottom surface portion, and Fig. 2B is a schematically explanatory view of a mode that the supporting body is separated from the edge-like member forming the periphery of the upper edge portion in a seat cushion pad having no bottom surface portion;

Figs. 3A and 3B are schematically explanatory views of a cross section along a line B-B in Fig. 1, in which Fig. 3A is a schematically explanatory view of a mode that the supporting body is integrated with the edge-like member forming the periphery of the upper edge portion in the seat cushion pad having the bottom surface portion, and Fig. 3B is a schematically explanatory view of a mode that the supporting body is integrated with the edge-like member forming the periphery of the upper edge portion in the seat cushion pad having no bottom surface portion;

Figs. 4A and 4B are schematically explanatory views of a cross section along a line A-A in Fig. 1, in which Fig. 4A is a schematically explanatory view of the supporting body in the seat cushion pad having the bottom surface portion, and Fig. 4B is a schematically explanatory view of the supporting body in the seat cushion pad having no bottom surface portion;

Figs. 5A and 5B are explanatory views showing a shape of the supporting body, in which Fig. 5A is a schematic view of the supporting body having a circular arc shape, and Fig. 5B is a schematic view of the supporting body having a bent shape which is combination of straight line portions which are obtained by bending straight lines at optional angles;

Fig. 6 is a schematically explanatory view of the cross section along the line A-A in Fig. 1, and a schematically explanatory view of a cross section of the supporting body in the seat cushion pad having the bottom surface portion;

Fig. 7 is a schematically explanatory view of the cross section along the line A-A in Fig. 1, and a schematically explanatory view of a cross section showing a mode that a projection portion is provided in a protruding manner on a bottom surface of the supporting body in the seat cushion having the bottom surface portion;

Fig. 8 is a schematically explanatory view of the cross section along the line A-A in Fig. 1, and a schematically explanatory view of a cross section showing a mode that the projection portion is provided in a protruding manner on facing surfaces of the bottom surface of the supporting body in the seat cushion pad having the bottom surface portion;

Figs. 9A and 9B are views showing a bending test method which is defined in JIS K7171 or ISO178, in which Fig. 9A is a view at the no-load application time, and Fig. 9B is a view at the 55 kg load application time;

Figs. 10A and 10B are explanatory views of modes at the no-load application time described in a second aspect, in which Fig. 10A is an explanatory view of a mode that an elastic body is extended, and Fig. 10B is an explanatory view of a mode that the elastic body is provided in a seat frame;

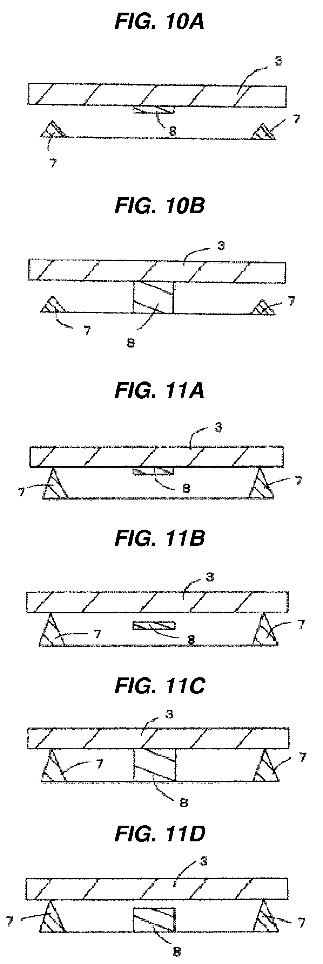

Figs. 11A to 11D are explanatory views of modes at the no-load application time described in a third aspect, in which Fig. 11A is an explanatory view of a mode that the elastic body is extended and comes into contact with the supporting body, Fig. 11B is an explanatory view of a mode that the elastic body is extended and does not come into contact with the supporting body, Fig. 11C is an explanatory view of a mode that the elastic body is provided in the seat frame and comes into contact with the supporting body, and Fig. 11D is an explanatory view of a mode that the elastic body is provided in the seat frame and does not come into contact with the supporting body;

Fig. 12 is a cross sectional view along the line A-A of a seat cushion for vehicles according to a second embodiment of the present invention, and an explanatory view of the cross section at the no-load application time;

Fig. 13 is a cross sectional view along the line A-A of the seat cushion for vehicle according to the second embodiment of the present invention, and a schematic view of the cross section when a seat cushion pad comes into contact with a seat frame 7 due to the load application;

Fig. 14 is a cross sectional view along the line A-A of the seat cushion for vehicles according to the second embodiment of the present invention, and a schematic view of the cross section under bending deformation of the seat cushion pad after load application;

Fig. 15 is a cross sectional view along the line A-A of the seat cushion for vehicles in which an interposed material is provided on the seat frame 7 in the second embodiment of the present invention, and an explanatory view of the cross section at the no-load application time;

Fig. 16 is a cross sectional view along the line A-A of the seat cushion for vehicles in which an elastic contact body is provided on the seat frame 7 in the second embodiment of the present invention, and an explanatory view of the cross section at the no-load application time;

Fig. 17 is a cross sectional view along the line A-A of the seat cushion for vehicles in which the elastic contact body is provided on the seat frame 7 in the second embodiment of the present invention, and a schematic view of the cross section when the seat cushion pad comes into contact with the seat frame 7 due to the load application;

Fig. 18 is a cross sectional view along the line A-A of the seat cushion for vehicles in which the elastic contact body is provided on the seat frame 7 in the second embodiment of the present invention, and a schematic view of the cross section under bending deformation of the seat cushion pad due to the load application;

Fig. 19 is a cross sectional view along the line A-A of the seat cushion for vehicles according to the first embodiment of the present invention, and an explanatory view of the cross section at the no-load application time;

Fig. 20 is a cross sectional view along the line A-A of the seat cushion for vehicles according to the first embodiment of the present invention, and a schematic view of the cross section under downward movement of the seat cushion pad due to the load application;

Figs. 21A and 21B are explanatory views of deformation of the seat cushion pad in the cross section along the line A-A in the case of the mode that the elastic body is not used, in which Fig. 21A shows a state at the no-load application time, and Fig. 21B shows a state at the load application time;

Figs. 22A to 22D are views explaining a relationship between the load and displacement of the seat cushion when the load by an occupant is applied, in which Fig. 22A shows the case of the second embodiment, Fig. 22B shows the case that the elastic contact body is provided on the seat frame in the second embodiment, Fig. 22C shows the case of the first embodiment, and Fig. 22D shows the case that the seat cushion pad is not supported by the elastic body but is supported by the seat frame 7;

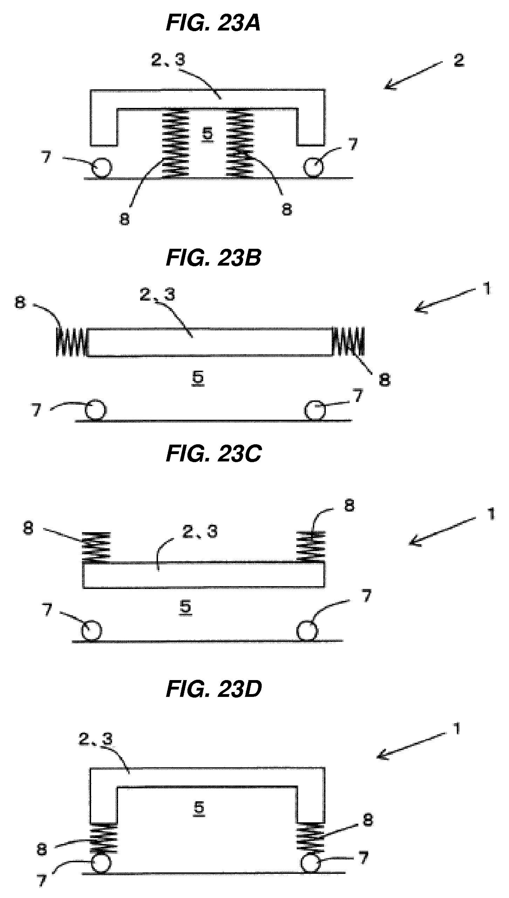

Figs. 23A to 23D are views showing examples of installation types of the elastic body in the seat cushion for vehicles according to the present invention, in which Fig. 23A shows a mode that the elastic body is provided on a rear face of a seating surface in the second embodiment, Fig. 23B shows a mode that the elastic body is provided in a lateral direction side of the seat cushion pad in the second embodiment, Fig. 23C shows a mode that the elastic body is provided in a seating surface side which is a front face side of the seat cushion pad in the second embodiment, and Fig. 23D shows a mode that the elastic body is provided in a lower surface of a leg portion of the seat cushion pad in the first embodiment;

Fig. 24 is a schematically perspective view of the seat frame in which the elastic body is extended;

Fig. 25 is a schematically explanatory view of the cross section along the line A-A in Fig. 1, and a schematically explanatory view of the cross section of the mode that the elastic body is extended in the seat cushion pad having no bottom surface portion;

Figs. 26A to 26F are explanatory views of kinds of the elastic body, in which Fig. 26A shows a wire formed screen, Fig. 26B shows an S-type spring, Fig. 26C shows a coil spring, Fig. 26D shows a metal leaf spring, Fig. 26E shows a torsion coil spring, and Fig. 26F shows a resin body;

Fig. 27 is a schematic view of load durability test;

Figs. 28A to 28C are schematic views of a back form pressing tool, in which Fig. 28A is a plan view, Fig. 28B is a front elevational view, and Fig. 28C is a side elevational view;

Fig. 29 is a diagram of a residual displacement amount due to repetition loads;

Fig. 30 is a load-displacement amount diagram with a seat cushion form;

Fig. 31 a comparison diagram between a foam and a non-foam in a bending test in accordance with JIS K7221-2; and

Fig. 32 is a compression-displacement amount diagram in a structure described in a third aspect of the invention.

## Mode for Carrying Out the Invention

A description will be given of an embodiment of a seat cushion 1 according to the present invention.

The seat cushion 1 according to the present invention is the seat cushion 1 including a seat cushion pad 2, wherein the seat cushion pad 2 is provided with edge-like members 10 which are arranged in a facing manner at a predetermined distance and are formed around an upper edge portion of the seat cushion pad 2, and a plurality of independent rod-like or plate-like supporting bodies 3 which are constructed by a synthetic resin foam having a bending deflection amount equal to or larger than 20 mm and a load between 2 and 100 N at the 20 mm bending deflection time, both the bending deflection amount and the load being measured in accordance with a method described in JIS K7221-2: 2006, the seat cushion pad 2 is structured such as to be mounted, fitted or fixedly provided in the edge-like member 10 or be integrally formed with the edge-like member 10, so as to be supported at one point or a plurality of points in a direction of bridging between the edge-like members 10, a plurality of supporting bodies 3 are structured such as to be lined up at predetermined intervals, and a space portion 5 is provided so that the supporting bodies 3 are allowed to be deformed by bending in a downward direction of the supporting bodies 3. Further, a bending distortion generated in the supporting body 3 by the load of the weight can be set within 5 % when an occupant having weight of 55 kg seats.

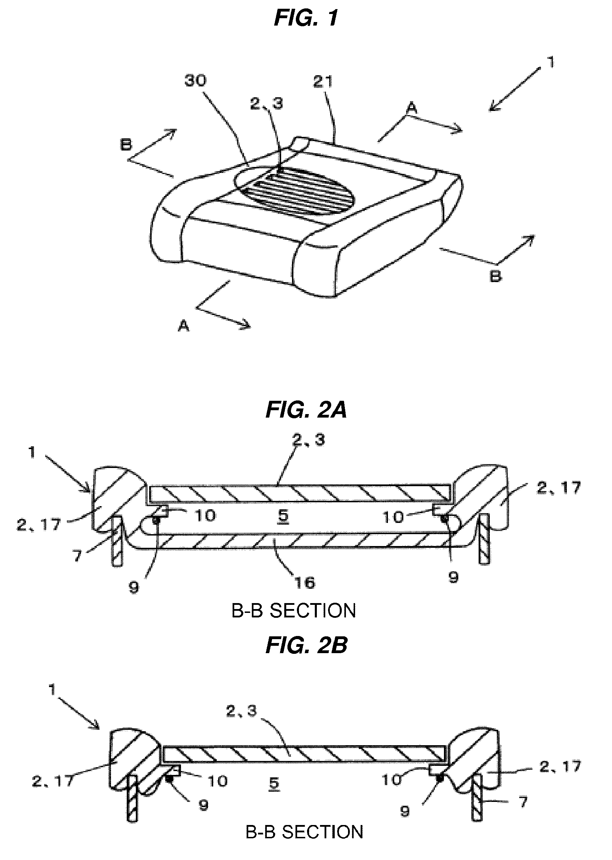

As shown in Figs. 1 to 3, the supporting body 3 is fixed or integrally formed in an edge-like member 10 which forms a periphery of an upper edge portion of the seat cushion pad 2, and the supporting body 3 is included in constituting elements of the seat cushion pad 2 and forms a seating surface of the seat cushion pad 2. The edge-like member 10 may be formed in all the peripheral edge portions of the upper edge portion of the seat cushion pad 2 or may be formed in the facing edge portions.

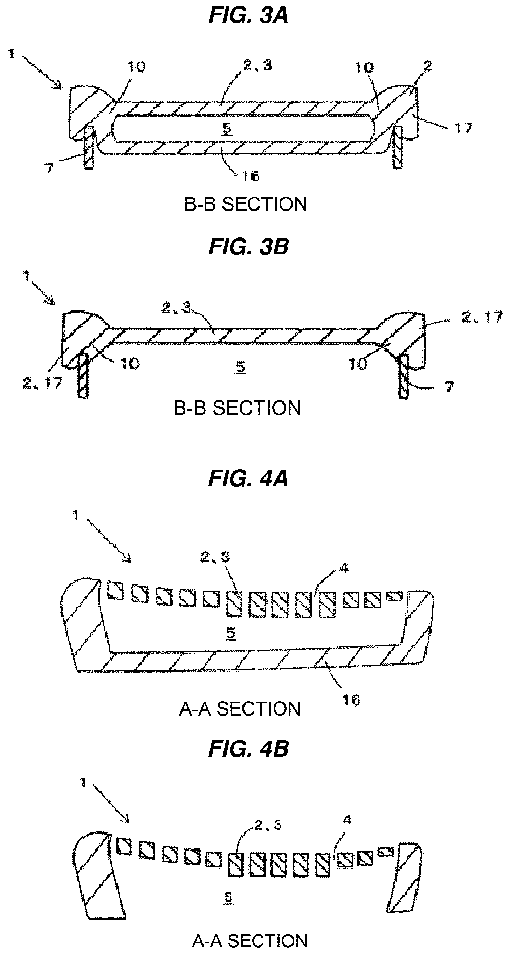

Further, the seat cushion pad 2 is constructed by the supporting bodies 3 which form a seating surface, and a position including side portions 17 and a bottom portion 16 which constructs a lower side, constructed by a position including the supporting bodies 3 which form the seating surface, and the side portions 17, or constructed only by the supporting bodies 3 which forms the seating surface. A gap 4 is formed between the supporting bodies 3 as shown in Fig. 4. Further, a space portion 5 is formed below the supporting bodies 3. In the case that the seat cushion pad 2 is constructed only by the supporting bodies 3 which form the seating surface, the supporting bodies 3 are mounted to the seat frames 7.

Further, the seat cushion 1 is covered at least in an outer peripheral surface of the seat cushion pad 2 with a vehicle seat cover 21 as shown in Fig. 1.

Next, a description will be given of an attaching mode of the supporting bodies 3. The supporting bodies 3 are arranged as shown in a vehicle-seat-cover partially-removed range 30 in Fig. 1. As shown in Fig. 2, in the case that the seat cushion pad 2 is separated into the supporting bodies 3 and the other sections, the supporting bodies 3 are fixed by one-point support to one side of the facing sides of the edge-like member 10 which forms a periphery of an upper edge portion of the seat cushion pad 2 or are fixed by plural-points support to both sides of the edge-like member 10 which forms the periphery of the upper edge portion. Further, in the case that the seat cushion pad 2 is integrally formed without being separated into the supporting bodies 3 and the other sections as shown in Fig. 3, the supporting bodies 3 are integrally formed according to the one-point support mode or the plural-points support mode with the edge-like member 10 which forms the periphery of the upper edge portion of the seat cushion pad 2. The seat frame 7 or wires 9 are preferably arranged below the peripheral edge portion in a side where the supporting bodies 3 are fixed, thereby applying rigidity to the peripheral edge portion in the fixed side so as to form a supporting point at the deflection time of the supporting bodies 3.

Further, the supporting bodies 3 are disposed independently with predetermined space from each other so that the adjacent supporting bodies 3 are not influenced by each other due to their contact and so that each supporting body 3 can be individually deformed by bending in a different manner.

Each of the supporting bodies 3 is independent by the gaps 4 so as not to be influenced by other supporting bodies 3. Thus, it is easy to provide completely different bending properties to each of the supporting bodies 3, which improves a degree of freedom of design. Therefore, it is possible to provide high cushioning properties and fitting feeling to the seat cushion and secure higher comfort. Consequently, when a load is applied on the seat cushion by an occupant, each section of the supporting bodies 3 with which a body comes into contact can be applied a preferable deflection amount so as to obtain a degree of the load in accordance with body pressure distribution or a desirable body retention position.

In the seat cushion structure described in the patent document 2, it is difficult to obtain a certain deflection amount or larger, to obtain desirable cushioning properties and deflection amount that are different depending on sections, and to provide followability for keeping a body at a desirable position even when acceleration is applied on the body of an occupant due to movement of a vehicle. However, the seat cushion structure according to the present invention can solve these problems easily since each of the flexible supporting bodies 3 can operate independently.

Next, a description will be given of the gap 4 which is provided between the supporting bodies 3. The gap 4 preferably has a width of 2 mm or larger and 15 mm or smaller. The width of the single gap 4 may be uniform or partially variable depending on sections. When the width of the gap 4 is within the above range, it is possible to suppress, when the supporting bodies 3 having received a load of the body of the occupant is deformed by bending, occurrence of low grade noise and blocking of bending deformation that are caused by mutual friction of the supporting bodies 3 arranged adjacent to each other, and to further suppress concave and convex feeling of the supporting bodies 3 and the gaps 4 when seated.

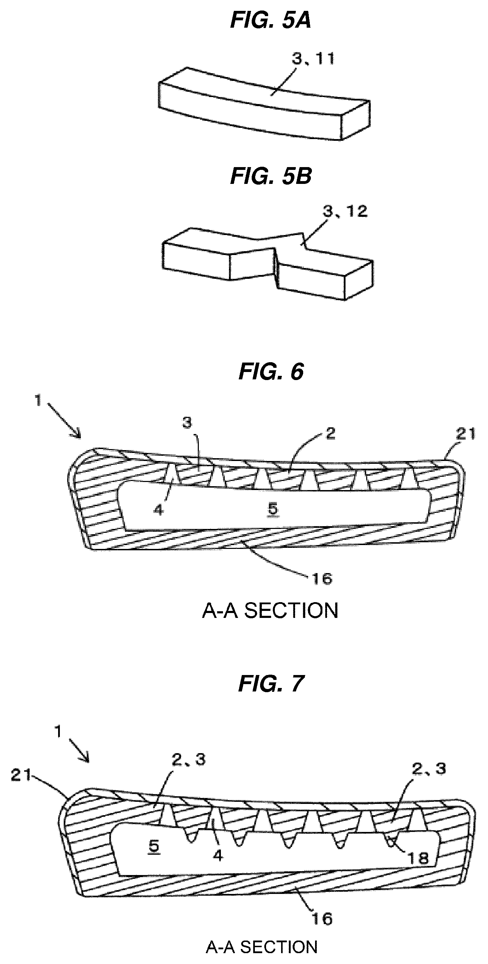

Further, as shown in Figs. 6 to 8, it is preferable to design the width of the gap 4 (space between supporting bodies 3) to be narrower on the surface side of the seat cushion and wider on the rear side thereof. It is because when the acceleration is applied on the occupant due to movement of a vehicle in front-rear and right-left directions and the supporting bodies 3 are three-dimensionally deformed with this in a complicated manner, the mutual contact can be prevented.

Next, a description will be given of the supporting bodies 3. The form of the supporting body 3 in plan view may be a linear shape or a curved shape in any direction within 360 degrees including a horizontal, vertical, or diagonal direction, or a bent shape formed by combination of straight lines bent with optional angles. When the width (front-rear direction) of the seat cushion 1 is sufficiently large, it is possible to increase bending deflection (indicating the limit to which the supporting body 3 can be bent and deflected in accordance with the degree of pressure of the occupant) of the supporting body 3 even when the form of the supporting body 3 is linear. When the width of the seat cushion 1 is small, it is difficult to increase the bending deflection of the supporting body 3. Then, when it is difficult to secure a span which is satisfactory for the supporting body 3 due to limit of the width (front-rear direction) of the seat cushion 1 on the design of the seat cushion 1, and it is necessary to further increase the bending deflection of the supporting body 3, the form of the supporting body 3 in plan view is deformed to a circular arc shape, or a bent shape formed by combination of straight lines bent with optional angles, as shown in Fig. 5A or 5B. As a result, it is possible to increase the substantial length of the supporting body 3 to be bent and effectively obtain necessary deflection.

Next, the sectional shape of the supporting body 3 can be an optional shape such as a rectangular shape, a round-bar shape, and an oval shape. In order to avoid concentration of stress at the bending deformation time, a corner portion preferably has a shape not including an acute angle portion.

The size of each of the supporting bodies 3, that is, a width, a thickness, a length and a shape thereof are designed depending on optimal cushioning properties and deflection amount which are determined by rigidity of a synthetic resin foam to be used, shapes of portions of the body portions of the assumed occupant, and a seat position. As the specific size, the width of the supporting body 3 in a vertical direction is preferably equal to or larger than 12 mm and equal to or smaller than 200 mm. The thickness in a front-rear direction is preferably equal or larger than 10 mm and equal to or smaller than 60 mm. The followability to a body shape is increased as the width of the supporting body 3 is smaller. However, the width is preferable to be within the above range from the point of view of balance between durability and cushioning properties or fitting feeling of the supporting body 3. Further, the length of the supporting body 3 is determined optionally depending on the size of the body of the assumed occupant, the size of the seat, or the supporting form of the supporting body 3.

Further, the shape of the supporting body 3 can be set so that the bending distortion generated in the supporting body 3 by the load is within 5 % when the occupant having the weight of 55 kg seats. The weight of the occupant is set to 55 kg since the weight per one occupant used in calculation of vehicle total weight defined in JIS D0001-2001 is 55 kg.

The seat cushion 1 is demanded sufficient durability restoration properties against the repetition loads over the long term. In a solid material including the metal material without being limited to the resin material, the deformation generally turns back to the original shape without remaining after the load removal as long as the deformation generated by the load is within an elastic range. A clear yield point appears on a stress-distortion graph in a material such as a soft steel in the elastic range, and a section where the stress linearly rises in correspondence to the distortion before the yield point can be clearly defined as the elastic range. However, the resin does not have any clear yield point, and the material transfers to a plastic deformation little by little due to the applied load. Since the synthetic resin foam is soft particularly, it is not easy to precisely measure but it is difficult to precisely define the elastic range.

The inventors have repeated trials and searched conditions for confining a residual distortion after the repeated use demanded in the seat cushion 1 to a range which can keep the marketability in the case that the weight of the occupant at the seat cushion designing time is set to 55 kg, on the basis of the fact that the average weight of the Japanese women between 20 years old and 24 years old is 50.76 kg in accordance with the research about weight for general adults by Ministry of Education, Culture, Sports, Science and Technology, and the weight per one occupant used for calculating total weight of the vehicle defined in JIS D0001-2001 is 55 kg. As a result, the inventors have arrived at a conclusion that it is necessary to confine the bending distortion generated when the load is applied to the supporting bodies 3 to 5 % in a value of the bending distortion measured in accordance with the method defined by JIS K7171 or ISO178. Therefore, the seat cushion 1 according to the present invention can further achieve an effect of satisfying the durability restoration properties against the repetition loads over the long term, as long as the bending distortion generated in the supporting bodies 3 is within 5 %.

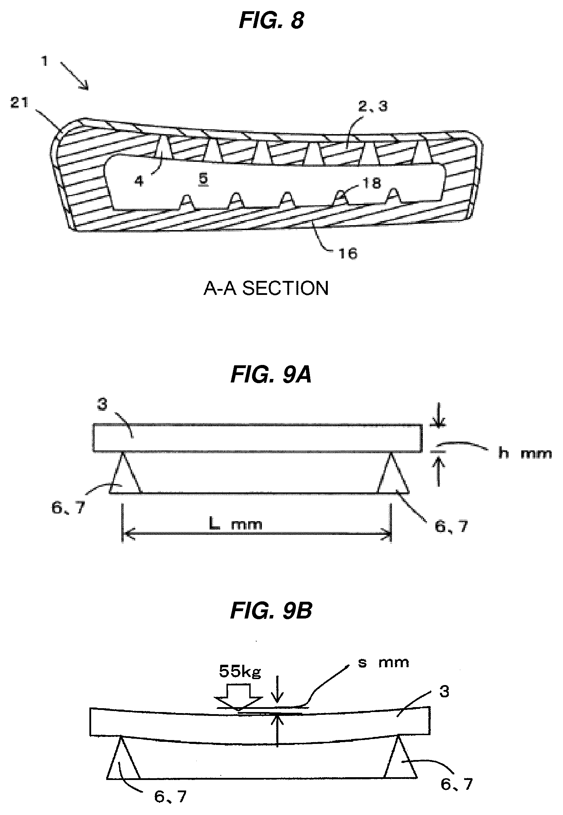

A description will be given of the matter that the bending distortion is set within 5 %. The bending distortion can be determined by JIS K7171 or ISO178 which is a standard of a hard or semi-hard plastic bending test method. First of all, a dummy having a load of 55 kg is seated at a normal position of a seat cushion which is a test body, and the load applied to each of sections of the seat cushion is measured. The load applied to the supporting body in each of the corresponding sections is determined on the basis of the results. The bending distortion is thereafter determined by measuring a deflection amount generated by applying the determined load to an experimental sample having the same shape and supporting mode as those of the corresponding portion, and substituting it into the calculation expression (Expression 1) defined in JIS K7171 together with a supporting point distance of the supporting body and a thickness of the supporting body. A typified bending test method is shown in Fig. 9. Fig. 9A shows a no-load time, and Fig. 9B shows generation of s mm deflection when the load 55 kg is applied. Further, the bending distortion is calculated from the following relational expression (Expression 1).

$$\text{Bending distortion } \varepsilon \ (\%) = 600 \ sh/L^2 \qquad \text{(Expression 1)}$$

in which s is deflection (mm), h is thickness (mm) of the test specimen (the supporting body 3) and L is distance between supporting points (distance between supporting points supporting the supporting bodies) (mm). The contact point portions between the supporting body 3 and the leg body 6 or the seat frame 7 supporting the supporting body 3 at both ends correspond to the supporting points.

Therefore, the bending distortion generated in the supporting body 3 by the load when the occupant having the weight of 55 kg seats can be determined by measuring the deflection (s) of the supporting body 3 when the occupant having the weight of 55 kg seats, and measuring the distance (L) between right and left ends supporting the supporting body 3 and the thickness (h) of the supporting body 3.

Consequently, a factor by which durability restoration properties can be satisfied against the repetition loads over the long term was determined from the residual distortion after the repeated use. As a result, trials were repeated and conditions were searched for confining the residual distortion after the repeated use required for the seat cushion 1 to a range that the marketability can be kept. As a result, there arrived at the conclusion that it is necessary to confine the bending distortion generated when the load is applied to the supporting bodies 3 to within 5 % in the value of the bending distortion measured in accordance with the method defined in JIS K7171 or ISO178. In order to set the bending distortion within 5 %, combination of the material, the shape, the cross sectional shape and the magnitude of the supporting body 3 is considered and set. In the case that the structure of the supporting body 3 is set so that the bending distortion goes beyond 5 %, the supporting body can stand against a small number of loads, however, the shape of the supporting body is not restored against the repetition loads over the long term and satisfactory cushioning properties can not be obtained.

There can be achieved an effect that the durability restoration properties can be satisfied against the repetition loads over the long term, by confining the deflection of the supporting body 3 when the occupant having the weight of 55 kg seats, to within 5 %.

Next, a description will be given of the elastic bodies 8. The elastic bodies 8 are provided so as to move up and down the supporting body 3 constructing the seating surface of the seat cushion pad 2 made of the synthetic resin foam. For example, the elastic bodies 8 are provided so as to be brought into contact with the rear face side of the supporting body 3 (the seat cushion pad 2) as shown in Fig. 23A, are provided in a lateral direction in right and left end portions of the supporting body 3 (the seat cushion pad 2) as shown in Fig. 23B, are provided in an upper side of the supporting body 3 (the seat cushion pad 2) as shown in Fig. 23C, or are provided between a lower surface of the leg body of the supporting body 3 (the seat cushion pad 2) and an upper surface of the seat frame 75 as shown in Fig. 23D. Any mode may be employed as long as the downward movement of the seat cushion pad 2 (the supporting body 3) is generated together with a certain reaction force which is necessary for giving the impression that the seating surface is soft to the occupant when the occupant seats, and the bending deformation beyond the elastic region is not generated in the seat cushion pad 2.

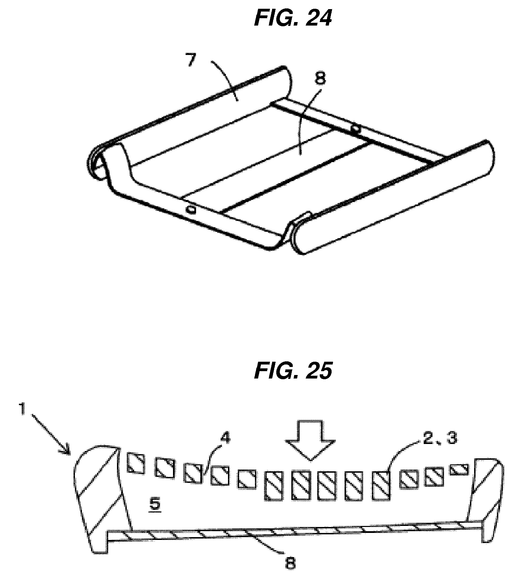

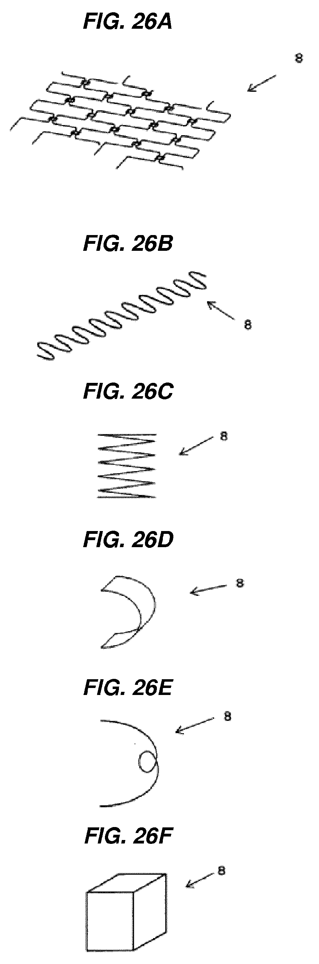

The elastic body 8 can be structured as long as a sufficient restoring force is provided, as shown in Fig. 24 or 26, and can be formed into a belt-like structure in which synthetic fibers such as polyester are woven at high density (Fig. 24), a wire formed screen (Fig. 26A), an S-type spring (Fig. 26B), a coil spring (Fig. 26C), a metal leaf spring (Fig. 26D), a helical torsion spring (Fig. 26E), and a resin body having an elasticity such as rubber or urethane (Fig. 26F). The elastic body 8 structured such as to be extended in Fig. 10 corresponds, for example, to the belt-like structure, the wire formed screen and the S-type spring, and the elastic body 8 structured such as to be arranged on the facing surfaces of the supporting body 3 corresponds, for example, to the coil spring and the helical torsion spring.

A positional relationship of the supporting body 3, the elastic body 8 and the seat frame 7 firstly has a mode that the supporting body 3 and the seat frame 7 are separated by the elastic body 8 at the no-load time as shown in Fig. 10, and secondly has a mode that the supporting body 3 and the seat frame 7 are connected regardless of the arrangement position of the elastic body 8 at the no-load time as shown in Fig. 11.

In the case of the mode that the supporting body 3 and the seat frame 7 are separated by the elastic body 8 at the loading time as shown in Fig. 10, a whole of the supporting body 3 starts moving downward just after the loading. The mode of the elastic body 3 in this case has a mode that the elastic body is extended as shown in Fig. 10A or a mode that the elastic body is arranged on the facing surface of the supporting body 3 as shown in Fig. 10B.

The structure described in the second aspect corresponds to the structure shown in Fig. 10, and has a first mode that that the weight of the occupant balances a reaction force in an upward direction of the elastic body 8 generated by downward movement of the supporting body 3 due to an elastic expansion or an elastic contraction of the elastic body 8 without contact with the seat frame 7, and a second mode that the weight of the occupant balances a reaction force in an upward direction generated by downward bending deformation of the supporting body 3 in a both-ends supported state after the supporting body 3 moves downward due to the elastic expansion or the elastic contraction of the elastic body 8 and comes into contact with the upper portion of the seat frame 7, and the reaction force in the upward direction of the elastic body 8.

A description will be given of a mode that the elastic body 8 is not provided below the supporting body 3 (the seat cushion pad 2), and the supporting body 3 (the seat cushion pad 2) is supported like a both-end supported beam by the seat frame 7, thereby being deformed by bending downward and providing the cushioning properties, as a comparative example.

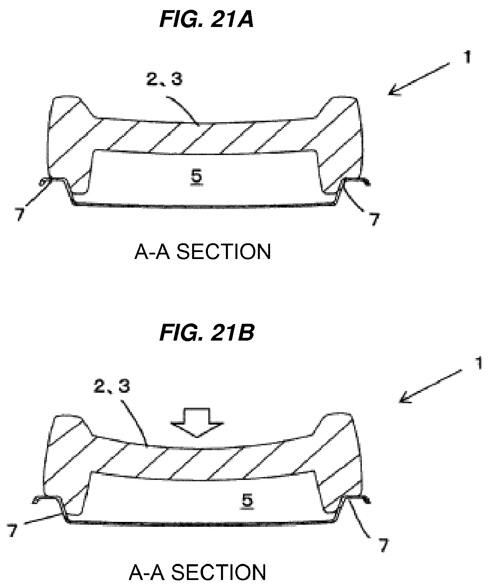

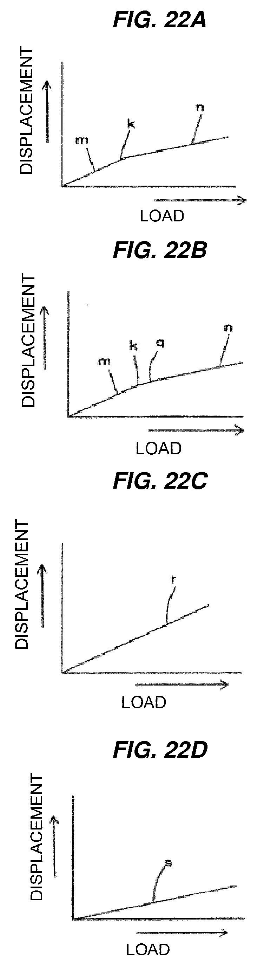

In the case that the supporting body 3 is deformed by bending as shown in Fig. 21B under the both-end supported beam state supported by the seat frame 7 as shown in Fig. 21A, a displacement amount bending downward by the bending deformation of the supporting body 3 changes as shown by a line s in proportion to the weight of the load, as shown in Fig. 22D, and the cushioning properties can be felt by the occupant in spite of the supporting body 3 having the rigidity.

However, the occupant tends to feel the higher cushioning properties as the occupant feels sinking of the seating surface at the moment when the occupant seats. On the contrary, the sinking of the seating surface was difficult to be felt. Further, since the synthetic resin foam tends to have the smaller elastic region, there was fear that the deformation beyond the elastic region was generated when the occupant having the heavy weight seats at multiple times and could not be restored, so that the deformation was accumulated.

Consequently, in order to make the occupant feel the sinking at the moment when the occupant seats, there employed a mode that the supporting body 3 (the seat cushion pad 2) is maintained in a state of being separated from the seat frame 7 in the up-down direction by the supporting elastic body 8 under an energizing state in the upward direction at the no-load time, and the supporting body 3 (the seat cushion pad 2) generates the reaction force in the upward direction of the elastic body 8 while moving downward by the elastic expansion or the elastic contraction of the elastic body 8 without coming into contact with the seat frame 7, in relation to the force in the downward direction due to the load, at the beginning of the load application by the occupant.

The occupant could feel such comfortable cushioning properties that the occupant sinks at the moment when the occupant seats, by employing the mode.

The mode of the change of the supporting body 3 (the seat cushion pad 2) when the occupant seats has a mode that the force in the downward direction by the load of the occupant balances the reaction force in the upward direction of the elastic body 8 generated by the downward movement of the seat cushion pad 2 due to the elastic expansion or the elastic contraction of the elastic body 8 without coming into contact with the seat frame 7, as a first mode.

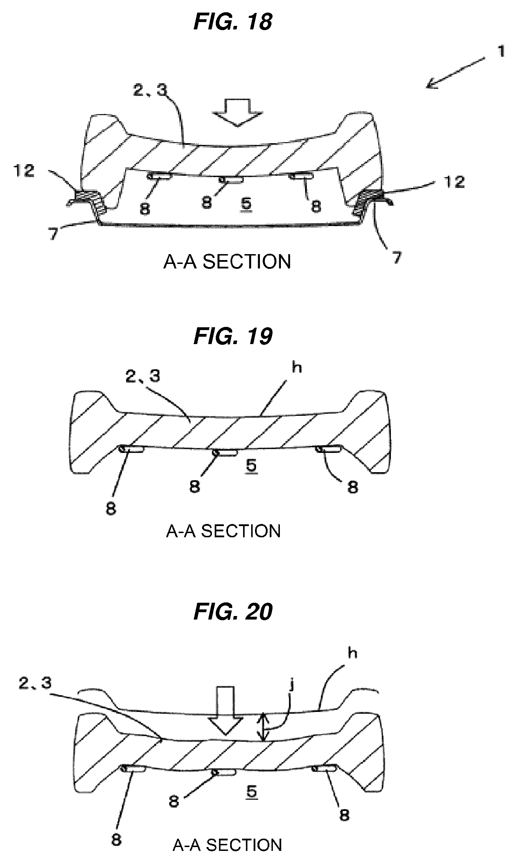

In the case of the first mode, the supporting body 3 (the seat cushion pad 2) is maintained in a state in which the supporting body 3 (the seat cushion pad 2) does not come into contact with the seat frame 7 by the elastic body 8 supporting in the energizing state in the upward direction at the no-load time, as shown in Fig. 19. When the weight of the occupant is applied, the supporting body 3 (the seat cushion pad 2) starts sinking and sinks until reaching the reaction force which balances the force in the downward direction by the load of the occupant while deforming by bending around the elastic body 8, as shown in Fig. 20. Fig. 20 shows the fact that a position h of a surface of the seat cushion pad 2 (the supporting body 3) at the no-load time comes to a sinking amount j due to the sinking.

Further, the displacement amount at which the seat cushion pad 2 (the supporting body 3) sinks downward due to the elastic expansion or the elastic contraction of the elastic body 8 changes as shown by a line r in proportion to the weight of the load, as shown in Fig. 22C. The occupant can feel the sinking of the seating surface and feel the high cushioning properties after the moment of seating until the stop of the sinking on the basis of the change.

Next, there is a mode that the force in the downward direction by the load of the occupant balances the reaction force in the upward direction generated by the downward movement of the seat cushion pad 2 due to the elastic expansion or the elastic contraction of the elastic body 8 and the downward bending deformation of the seat cushion pad 2 (the supporting body 3) in the both-end supported state after the contact with the upper portion of the seat frame 7, and the reaction force in the upward direction of the elastic body 8, as a second mode among the modes of the change of the seat cushion pad 2 (the supporting body 3) when the occupant seats.

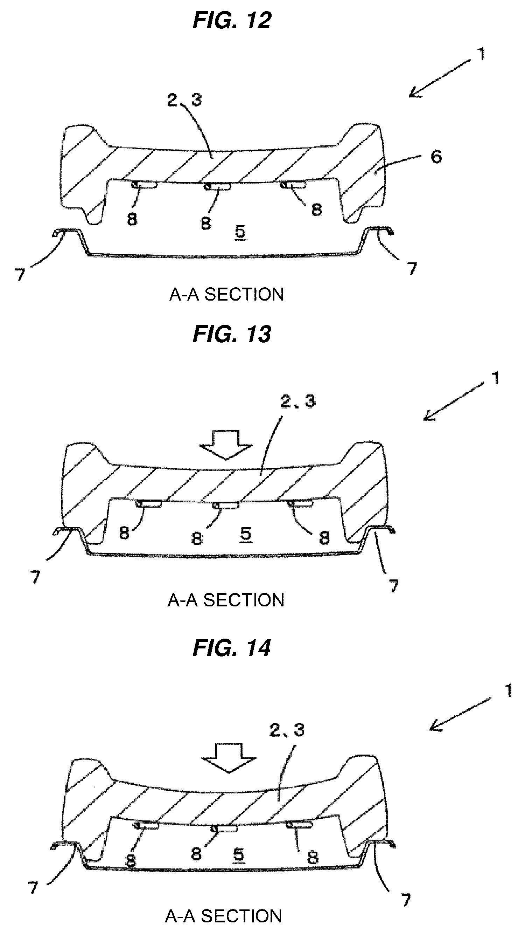

In the case of the second mode, the seat cushion pad 2 (the supporting body 3) is maintained in the state in which the seat cushion pad 2 (the supporting body 3) does not come into contact with the seat frame 7 by the elastic body 8 supporting in the energizing state in the upward direction at the no-load time, as shown in Fig. 12. When the weight of the occupant is applied, the seat cushion pad 2 (the supporting body 3) starts sinking, and comes into contact with the seat frame 7 by sinking while deforming by bending around the elastic body 8 as shown in Fig. 13. Thereafter, the seat cushion pad 2 (the supporting body 3) is a both-end supported structure having the right and left seat frames 7 as the supporting point as shown in Fig. 14, and the seat cushion pad 2 (the supporting body 3) deforms by bending around both ends.

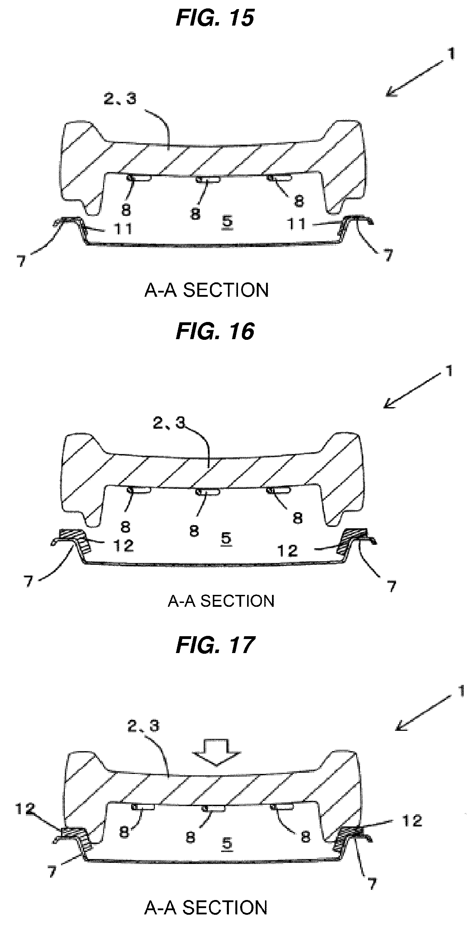

Further, the second mode includes a mode that interposed materials 11 such as unwoven fabric are interposed in a contact portion of the seat frame 7 with the seat cushion pad 2 for preventing squeak as shown in Fig. 15. Although the seat frame 7 and the seat cushion 2 are not directly in contact, the seat cushion pad 2 is a both-end supported structure around the right and left seat frames 7 at the same time when the seat cushion pad 2 comes into contact with the right and left interposed materials 11 since the interposed material 11 is not an elastic body. Then, the seat cushion pad 2 deforms by bending around both ends.

Further, as shown in Fig. 22A, the displacement amount at which the seat cushion pad 2 sinks downward by the elastic expansion or the elastic contraction of the elastic body 8 changes like transition of a line m in proportion to the weight of the load, and thereafter changes like a line n by the bending deformation in the both-end supported beam state of the seat cushion pad 2 from the time point k that the seat cushion pad 2 comes into contact with the seat frame 7. The occupant can mainly feel such the comfortable cushioning properties as to sink at the beginning of seating, and can thereafter feel such the comfortable cushioning properties as to ground in a soft-touch manner.

Further, in the case of the second mode, there is a mode that elastic contact bodies 12 are provided on the seat frames 7 as shown in Figs. 16 to 18. In the case of this mode, the seat cushion pad 2 is maintained in a state in which the seat cushion pad 2 does not come into contact with the seat frames 7 and the elastic contact bodies 12 by the elastic bodies 8 supporting in the energizing state in the upward direction at the no-load time, as shown in Fig. 16. When the weight of the occupant is applied, the seat cushion pad 2 starts sinking, sinks while deforming by bending around the elastic bodies 8 and comes into contact with the elastic contact bodies 12 which are provided in the upper portion of the seat frame 7 as shown in Fig. 17. Thereafter, the elastic contact bodies 12 are compression deformed as shown in Fig. 18, the seat cushion pad 2 is thereafter a both-end supported structure around the right and left seat frames 7, and the seat cushion pad 2 deforms by bending around both ends. In the present invention, the description "come into contact with the upper portion of the seat frame 7" includes the case that the seat cushion pad 2 comes into contact with the seat frame 7, or the case that the seat cushion pad 2 comes into contact with the elastic contact body 12 in the upper portion of the seat frame 7.

As the material of the elastic contact body 12, there are the metal leaf spring, the metal linear spring, the S-type spring, the coil spring, the rubber and the resin body having the elasticity which is deformed by compression within the elastic limit when the seat cushion pad 2 moves downward and in contact and the load is applied, and have a sufficient restoring force when the seat cushion pad 2 moves upward and is separated so as to be under a no-load state, however, any of them may be employed.

Further, as shown in Fig. 22B, the displacement amount at which the seat cushion pad 2 sinks downward due to the elastic expansion or the elastic contraction of the elastic body 8 changes like a transition of a line m in proportion to the weight of the load, thereafter changes as shown by a line q due to the compression deformation of the elastic contact body 12 from the time point k that the seat cushion pad 2 comes into contact with the elastic contact body 12 in the upper portion of the seat frame 7, and changes as shown by a line n due to the bending deformation in the both-end supported beam state of the seat cushion pad 2 after the compression of the elastic contact body 12. Since a connection point between the lines m and n is smoothly bent by the line q, the occupant gets the impression that the seat cushion for vehicles 2 is sufficiently soft since the downward movement of the seating surface is generated together with the certain reaction force first at the seating time, and the body is supported thereafter by the smooth addition of the displacement due to the bending deformation of the seat cushion pad 2. Therefore, an extremely comfortable seating feeling can be obtained.

Further, since the weight of the occupant is applied not only to the seat cushion pad 2 having the rigidity but also to the elastic body 8 in any of the first and second modes, the occupant can feel the load applied to the seat cushion pad 2. Therefore, the seat cushion pad 2 having a narrow elastic range because of the rigidity can be used within the elastic range regardless of the weight of the occupant.

Next, a description will be given of a mode (the invention described in the third aspect) that the elastic body 8 is provided below the supporting body 3, the end portion of the supporting body 3 and the seat frame 7 are in a connected state from the no-load time, and the supporting body 3 starts deforming by bending around the seat frame 7 just after the loading.

In the case of this mode, there are a mode that the supporting body 3 and the seat frame 7 are in contact and the extended elastic body 8 is in contact with the bottom surface of the supporting body 3 as shown in Fig. 11A under a non-load state, a mode that the supporting body 3 and the seat frame 7 are in contact and the extended elastic body 8 is separated from the supporting body 3 as shown in Fig. 11B, a mode that the supporting body 3 and the seat frame 7 are in contact and the elastic body 8 arranged on the facing surface of the supporting body 3 is in contact with the bottom surface of the supporting body 3 as shown in Fig. 11C, and a mode that the supporting body 3 and the seat frame 7 are in contact and the elastic body 8 arranged on the facing surface of the supporting body 3 is separated from the supporting body 3 as shown in Fig. 11D, in the no-load state. The modes that the elastic body 8 is separated from the supporting body 3 at the no-load time as shown in Figs. 11B and 11D are called as a third mode, and the modes that the elastic body 8 is brought into contact with the supporting body 3 at the no-load time as shown in Figs. 11A and 11C are called as a fourth mode.

In the case of the third mode, the supporting body 3 receiving the pressure by the seated person starts the downward bending deformation, the lower side of the supporting body 3 comes into contact with the elastic body 8 after the deformation reaches a certain magnitude, and the supporting force can be enhanced by the reaction force in the upward direction by the bending deformation of the supporting body 3 and the reaction force in the upward direction by the tensile force of the elastic body 8 after the contact. As a result, it is possible to suppress excessive sinking of the body, and it is possible to support the body of the seated person at an appropriate position.

In the case of the fourth mode, the supporting body 3 and the elastic body 8 receiving the pressure by the seated person simultaneously start the downward bending deformation, and the supporting force can be enhanced by the reaction force by the bending deformation of the supporting body 3 and the tensile force of the elastic body 8. As a result, it is possible to inhibit the body from sinking in the case that the weight of the occupant is heavy, and it is possible to support the body of the occupant having the heavy weight at an appropriate position.

Fig. 25 shows an example structured such that a belt-like elastic body 8 extended in the seat frame 7 is separated from the supporting body 3 in the no-load state. The supporting body 3 receiving the pressure generated by the seating of the occupant starts the downward bending deformation, however, the lower side of the supporting body 3 comes into contact with the elastic body 8 extended in the seat frame 7 after reaching a certain bending deformation so as to suppress the excessive body sinking, and support the body of the seated person on the basis of the reaction force due to the bending deformation of the supporting body 3 and the tensile force of the elastic body 8 after the contact.

As a result, the suitable cushioning properties can be provided even in the case that the magnitude of the body of the occupant is widely different.

Next, a description will be given of a projecting portion 18 projecting to the bottom surface of the rod-like or plate-like supporting body 3 which is interposed in a substantially horizontal direction between the right and left side portions 17 of the seat cushion pad 2 of the seat cushion 1, as shown in Fig. 7, or a projecting portion 18 projecting to the side of the space portion 5 on the facing surface in the bottom surface of the supporting body 3 in the seat cushion pad 2, as shown in Fig. 8.

The shape of the projection portion 18 includes a sharp shape in which the tip portion is pointed, a round shape in which the tip portion has roundness, or an obtuse tip plane shape in which the tip portion is tapered and has a flat portion.

After the supporting body 3 deforms by bending due to the load of the occupant and the projecting portion 18 comes into contact with the supporting body 3 in the facing side, both the projecting portion 18 and the supporting body 3 support the weight of the occupant and it is possible to suppress the excessive body sinking. Since the projecting portion 18 starts the compression deformation and the hardness of the seat cushion can be enhanced step by step, it is possible to more securely support the body of the seated person.

It is more preferable that the projecting portion 18 has an acute tip shape. This reduces rapid increase of reaction occurring after the contact of the projecting portion 18 and the bottom surface portion 16, which can reduce bottom butting feeling of the occupant.

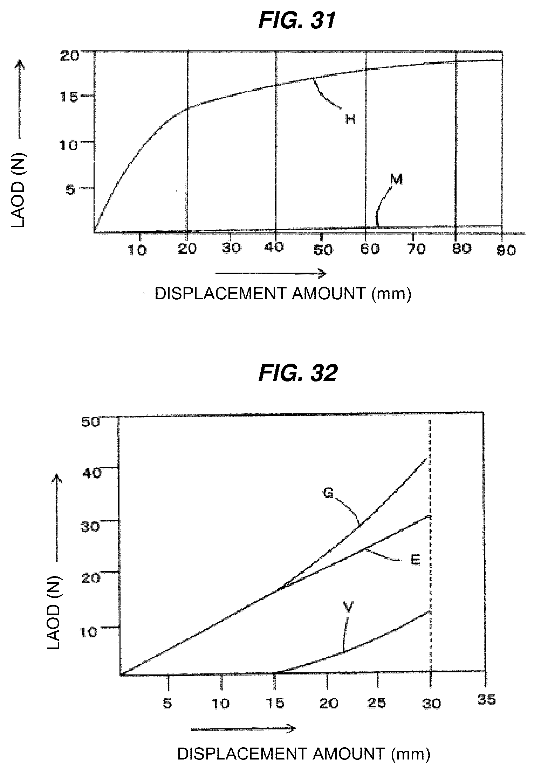

Fig. 32 shows an example in which a test specimen having the structure of the invention described in the third aspect is actually pressed by a testing machine. In the test specimen, the belt-like elastic body 8 is provided at a separated position below the supporting body 3, the end portion of the supporting body 3 and the seat frame 7 are in a connection state from the no-load time, and the supporting body 3 starts the bending deformation around the seat frame 7 just after the load application. Fig. 32 shows the reaction force occurred when the surface of the seat cushion is pressed by 30 mm using a hemispherical tool with a diameter of 100 mm at a speed of 100 mm/min. The lowest line V indicates the reaction force when only the belt that is the elastic body 8 is pressed, the central line E indicates the reaction force when only the supporting bodies 3 made of the synthetic resin foam are pressed, and the highest line G indicates the reaction force when the test specimen having the structure according to the present invention is pressed.

In the test specimen having the structure according to the invention described in the third aspect, the belt that is the elastic body 8 is provided at a position 15 mm below the supporting bodies 3 made of the synthetic resin foam. Thus, the supporting bodies 3 as a single component that are made of the synthetic resin foam and the test specimen having the structure according to the present invention generate exactly the same reaction force until being pressed by 15 mm with the test tool. Thereafter, the supporting bodies 3 made of the synthetic resin foam come into contact with the belt-like elastic body 8, and the reaction force occurred by each of the supporting body 3 made of the synthetic resin foam and the belt-like elastic body 8 is mixed, increasing rigidity gradually.

Next, a description will be given of the synthetic resin foam. The synthetic resin foam in the present invention indicates a synthetic resin foam molding that is flexible to be deformed by bending and excellent in the restoration properties. The bending deflection thereof measured in accordance with the method described in JIS K7221-2: 2006 (in the atmosphere of 23 °C $\pm$ 2 °C and relative humidity of 50 $\pm$ 5 %, a test specimen whose skin is removed having a length of 350 mm, a width of 100 mm, and a thickness of 25 mm is subjected to a load applied at a test speed 20 $\pm$ 1 mm/min with a distance between the supporting points of 300 mm until the deflection reaches 90 mm at maximum, and the load deflection curve is recorded) is equal to or larger than 20 mm, and the load when deflected by 20 mm is 2 to 100 N. The synthetic resin foam molding having breakage with bending deflection of smaller than 20 mm is inappropriate from the view of durability. When the cross section of the supporting body 3 necessary to support the pressure of the body is significantly large and the load when deflected by 20 mm goes beyond 100 N, it is difficult to generate a preferable deflection amount and achieve preferable design. More specifically, the synthetic resin foam indicates a polypropylene foam, a polyethylene foam, and other polyolefin resin foams, or a modified polystyrene resin foam. Among the above foams, the in-mold molding of resin foam particles is preferable from the view of the degree of freedom of form (easiness in design) taking the fitting feeling into consideration.

The polyolefin resin constituting foam particles used in the present invention is a polyolefin resin having olefin component units as a main component. More specifically, there can be exemplified polypropylene resin, polyethylene resin, and a mixture of such two kinds or more. The above "as a main component" means that 50 mass % or more of olefin component units is contained in the polyolefin resin. The contained amount is preferably equal to or more than 75 mass %, more preferably equal to or more than 85 mass %, and further preferably equal to or more than 90 mass %.

The polypropylene resin is exemplified by resin containing 50 mass % or more of propylene component unit, and is propylene homopolymer, or copolymer with other olefin that is copolymerizable with propylene. Other olefin that is copolymerizable with propylene is exemplified by ethylene and 4-10C $\alpha$-olefin such as 1-butene, isobutylene, 1-pentene, 3-methyl-1-butene, 1-hexene, 3, 4-dimethyl-1-butene, 1-heptene, and 3-methyl-1-hexene. The above-described copolymer may be random copolymer or block copolymer, and further may be not only binary copolymer but also ternary copolymer. Other olefin that is copolymerizable with propylene in the above-described copolymer is preferably contained at a ratio of 25 mass % or less, and particularly 15 mass % or less. The lower limit value is preferably 0.3 mass %. Furthermore, such polypropylene resin can be used individually or as a mixture of two kinds or more. The polypropylene resin is desirable to be a resin foam obtained by foaming of base resin having 600 MPa or higher in value of a tensile elastic modulus (E) defined in JIS K7161: 1994 (test specimen: test specimen 1 A described in JIS K7162 (1994) (molded directly by injection molding), test speed: 1 mm/min).

The polyethylene resin is exemplified by resin containing 50 mass % or more of ethylene component units, and is high density polyethylene, low density polyethylene, linear low density polyethylene, ethylene-vinyl acetate copolymer, ethylene-propylene copolymer, ethylene-propylene-1-butene copolymer, ethylene-1-butene copolymer, ethylene-1-hexene copolymer, ethylene-4-methyl-1-pentene copolymer, and ethylene-1-octene copolymer, for example, and a mixture of two kinds or more of them.

Then, with regard to the concrete selection of the synthetic resin foam, when a rod-like test specimen having a length of approximately 400 mm is further held at the part of both ends thereof and kept for 30 minutes after the center of the test specimen is pressed down about 25 mm, and then the load is released, the material preferably has restoration from deformation of the sample by 90% or higher. Alternatively, when the center portion of the sample held at the part of both ends thereof is pressed down repetitively a predetermined number of times and deformed, in accordance with the test conventionally performed for the seat cushion made of an urethane foam, the material preferably has residual distortion measured thereafter of a predetermined amount or smaller. The predetermined number of times and the predetermined amount are in accordance with specifications optionally defined when vehicle manufacturers conventionally select materials.

As material satisfying such conditions, a polypropylene foam with density of 0.06 $g/cm^3$ to 0.015 $g/cm^3$, and more preferably with density of 0.035 $g/cm^3$ to 0.015 $g/cm^3$, or a polyethylene foam with density of 0.08 $g/cm^3$ to 0.03 $g/cm^3$ are preferable, for example. Such materials have a load when bending deflected by 20 mm of 2 to 100 N in the test performed in accordance with the method described in JIS K7221-2: 2006 (in the atmosphere of 23 °C $\pm$ 2 °C and relative humidity of 50 $\pm$ 5%, a test specimen whose skin is removed having a length of 350 mm, a width of 100 mm, and a thickness of 25 mm is subjected to a load applied at a test speed 20 $\pm$ 1 mm/min with a distance between the supporting points of 300 mm until the deflection reaches 90 mm at the maximum, and the load deflection curve is recorded), and is excellent in the bending rigidity as well as the flexibility relative to the bending. On the other hand, the soft flexible polyurethane foam used generally and conventionally is significantly inferior in the bending rigidity of 0.46 N, and thus is not appropriate as the material constituting the seat cushion according to the present invention.

A description will be given below of creep properties and bending rigidity when the synthetic resin foam is used. First of all, permanent compression distortion in accordance with JIS K6767: 1999 was measured for evaluating the creep properties. The test specimen having a length of 50 mm, a width of 50 mm, and a thickness of 25 mm is compressed to the state in which it is distorted by 25 %, and left for 22 hours at a temperature of 23 °C $\pm$ 2 °C. The thickness after 24 hours from the finish of compression is measured. The permanent compression distortion was calculated by permanent compression distortion (%) = (original thickness of test specimen (mm) - thickness after 24 hours from finish of compression (mm))/original thickness of test specimen (mm) x 100.

As a result of the test, the permanent compression distortion of 45 times polypropylene foam particle molding was 11%. On the contrary, the permanent compression distortion of the polyurethane foam by the same measurement method is 2 % or smaller. This indicates that when the polyurethane foam, which is generally and conventionally used as a cushion material for a seat cushion and exerts the cushioning properties by the compression deformation, is simply substituted by the synthetic resin foam, the permanent compression distortion occurs, it is difficult to keep the original cushioning properties, and the marketability is deteriorated.

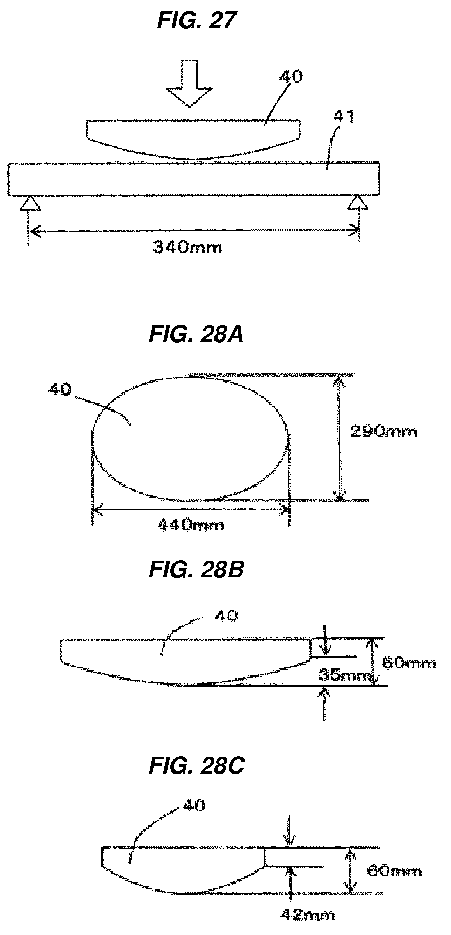

Next, a residual displacement amount after a sample plate 41 was pressed with a load of 490 N repetitively 5,000 times, 10,000 times, and 15,000 times in a normal temperature using a back form pressing tool 40 (oval shape in a plan view, length of 440 mm in right and left direction, depth (width) of 290 mm, height of 60 mm in front view) as shown in Fig. 28 was measured as a load durability test. In order to search a residual displacement amount when the synthetic resin foam is deformed by bending, the flat sample plate 41 that is a polypropylene foam 45 times foam and has a thickness of 20 mm and a width (depth) of 600 mm as shown in Fig. 27 was held at both ends thereof with 340 mm of space therebetween and used. The results of the load durability test are shown in Fig. 28.

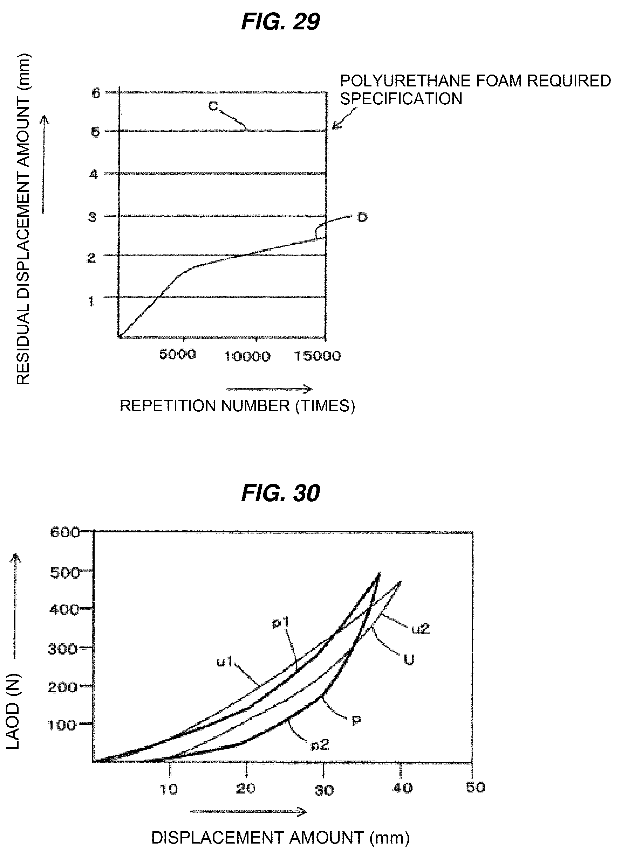

Fig. 29 shows that the specification required for the conventional polyurethane foam is 5 mm or smaller (line C in Fig. 29) in residual displacement amount, while the residual displacement amount in the case of the synthetic resin foam according to the present invention (line D in Fig. 29) is 2.5 mm, which is within a range of the specification.

Therefore, Fig. 29 shows that in the case that the deflection due to the bending deformation and the restoration properties of the synthetic resin foam that can be deformed by bending and is excellent in the restoration properties are used as a cushion material, the synthetic resin foam has the creep resistance properties equivalent to or superior to those of the polyurethane foam used conventionally.

The synthetic resin foam is superior to the polyurethane foam in the creep resistance properties. It is because when the synthetic resin foam is used as the supporting body 3, and the center portion is pressed down to be deformed by bending, stretching, compression, and shearing are applied to each portion of the members to be deformed, but the degree of each deformation is smaller as compared with a direct deformation amount when the members are used as a cushion material by simply compressing them in a conventional manner, remaining within an elastic area in which restoration properties are not deteriorated.

Next, Fig. 30 shows an example comparing reaction force occurred when the seat cushion form test specimen using the supporting bodies 3 made of a synthetic resin foam and the seat cushion form test specimen using a polyurethane foam having a conventional structure, which are held at both ends thereof, are pressed at a compression speed of 100 mm/min using the back form processing tool 40 as shown in Fig. 28. The size of the test specimen using an urethane foam is 650 mm in width, 350 mm in length, and 100 mm in thickness. The test specimen using a synthetic resin foam has a form in which a plurality of polypropylene foam 45 times having a length of 350 mm, a width of 50 mm, and a thickness of 30 mm are aligned with space of 2 mm. A fine line U shown in Fig. 30 is a load-displacement amount diagram of the polyurethane foam generally used for a seat cushion, and prepared for comparison. A bold line P is a load-displacement amount diagram when the center of the supporting body 3 made of the synthetic resin foam according to the present invention is pressed and bent. Furthermore, the load-displacement amount diagram when pressed down is shown with u1 and p1, and the load-displacement amount when released after pressed down is shown with u2 and p2.

Fig. 30 shows that even with the supporting body 3 made of a synthetic resin foam that is relatively hard, when the configuration is such that cushioning properties are obtained by the bending deformation, it is possible to obtain flexibility nearly same as that of the conventional polyurethane foam.

Next, Fig. 31 is a load-displacement amount diagram when the polypropylene foam is selected as an example of a synthetic resin foam, and a sample of a non-foaming resin plate (thickness of 1 mm) and a sample of a foaming polypropylene foam 45 times foam (thickness of 45 mm), which are made of same resin, are supported at both ends thereof, and the center portions thereof are pressed down, in accordance with JIS K7221-2: 2006 (in the atmosphere of 23 °C $\pm$ 2 °C, and relative humidity of 50 $\pm$ 5%, a test specimen whose skin is removed having a length of 350 mm, a width of 25 mm, the same sample weight, and an optional thickness is subjected to a load applied at a test speed 20 $\pm$ 1 mm/min with a distance between the supporting points of 300 mm until the deflection reaches 90 mm at the maximum, and the load deflection curve is recorded). The width was made constant to 25 mm, and the thickness was adjusted so that the weight of the samples is same. The case of the non-foaming resin plate is shown with a load-displacement amount diagram M, and the case of the sample made of the polypropylene foam 45 times foam is shown with a load-displacement amount diagram H.

Fig. 31 shows that although the weight of both samples is equal, the bending rigidity is significantly increased when the foam is adopted. Conventionally, it is not general to use a foam as a cushion material by deforming it by bending. However, it is indicated that the use of the foam can decrease the weight of parts necessary to obtain same bending rigidity, that is, the use of the foam enables light weighting of the seat cushion 1.

Description of Reference Numerals

1 seat cushion
2 seat cushion pad
3 supporting body
4 gap
5 space portion
6 leg body
7 seat frame
8 elastic body
9 wire
10 edge-like member
11 interposed material
12 elastic contact material
16 bottom portion
17 side portion
18 projecting portion
21 vehicle seat cover
30 vehicle-seat-cover partially-removed range
40 pressing tool
41 sample plate

**Claims**

**1.**   A seat cushion comprising a seat cushion pad,

wherein said seat cushion pad comprises:

edge-like members which are arranged in a facing manner at a predetermined distance and are formed around an upper edge portion of said seat cushion pad; and

a plurality of independent rod-like or plate-like supporting bodies which are constructed by a synthetic resin foam having a bending deflection amount equal to or larger than 20 mm and a load between 2 and 100 N at the 20 mm bending deflection time, both the bending deflection amount and the load being measured in accordance with a method described in JIS K7221-2: 2006,

wherein said seat cushion pad is structured such as to be mounted, fitted or fixedly provided in said edge-like member or be integrally formed with said edge-like member so as to be supported at one point or a plurality of points in a direction of bridging between said edge-like members, and said plurality of supporting bodies are structured such as to be lined up at predetermined intervals, and

wherein a space portion is provided so that said supporting bodies are allowed to be deformed by bending in a downward direction of said supporting bodies.

2. The seat cushion according to claim 1, wherein an elastic body is provided so as to be in contact with a bottom surface of said supporting body, said supporting body and a seat frame are separated at the no-load time, and said supporting body starts moving downward by deflection of the elastic body when the load is applied by seating of an occupant.

3. The seat cushion according to claim 1, wherein an elastic body is provided below said supporting body, an end portion of said supporting body and a seat frame are in a connection state at the no-load time, and said supporting body starts bending deformation from the seat frame as a supporting point just after the loading.

4. The seat cushion according to any one of claims 1 to 4, wherein said supporting body in a plane view is formed into a linear shape, a curved shape or a bent shape which is combination of straight line portions which are obtained by bending straight lines at optional angles.

## FIG. 1

## FIG. 2A

B-B SECTION

## FIG. 2B

B-B SECTION

## FIG. 3A

B-B SECTION

## FIG. 3B

B-B SECTION

## FIG. 4A

A-A SECTION

## FIG. 4B

A-A SECTION

## FIG. 5A

3、11

## FIG. 5B

3、12

## FIG. 6

1

3    2    21

4    5

16

A-A SECTION

## FIG. 7

1

21    2、3    2、3

5    4    18

16

A-A SECTION

## FIG. 8

A-A SECTION

## FIG. 9A

## FIG. 9B

## FIG. 10A

## FIG. 10B

## FIG. 11A

## FIG. 11B

## FIG. 11C

## FIG. 11D

## FIG. 12

A-A SECTION

## FIG. 13

A-A SECTION

## FIG. 14

A-A SECTION

## FIG. 15

A-A SECTION

## FIG. 16

A-A SECTION

## FIG. 17

A-A SECTION

## FIG. 18

A-A SECTION

## FIG. 19

A-A SECTION

## FIG. 20

A-A SECTION

## FIG. 21A

A-A SECTION

## FIG. 21B

A-A SECTION

## FIG. 22A

## FIG. 22B

## FIG. 22C

## FIG. 22D

### FIG. 23A

### FIG. 23B

### FIG. 23C

### FIG. 23D

## FIG. 24

## FIG. 25

FIG. 26A

FIG. 26B

FIG. 26C

FIG. 26D

FIG. 26E

FIG. 26F

## FIG. 27

40

41

340mm

## FIG. 28A

40

290mm

440mm

## FIG. 28B

40

60mm

35mm

## FIG. 28C

40

60mm

42mm

## FIG. 29

## FIG. 30

## FIG. 31

## FIG. 32

## INTERNATIONAL SEARCH REPORT

| International application No. |
|---|
| PCT/JP2014/066025 |

**A. CLASSIFICATION OF SUBJECT MATTER**
A47C7/18(2006.01)i, A47C27/14(2006.01)i

According to International Patent Classification (IPC) or to both national classification and IPC

**B. FIELDS SEARCHED**

Minimum documentation searched (classification system followed by classification symbols)
A47C7/18, A47C27/14

Documentation searched other than minimum documentation to the extent that such documents are included in the fields searched

| Jitsuyo Shinan Koho | 1922–1996 | Jitsuyo Shinan Toroku Koho | 1996–2014 |
| Kokai Jitsuyo Shinan Koho | 1971–2014 | Toroku Jitsuyo Shinan Koho | 1994–2014 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | Microfilm of the specification and drawings annexed to the request of Japanese Utility Model Application No. 093312/1971(Laid-open No. 48910/1973) (Honda Motor Co., Ltd.), 27 June 1973 (27.06.1973), fig. 1 (Family: none) | 1–4 |
| A | Microfilm of the specification and drawings annexed to the request of Japanese Utility Model Application No. 81361/1990(Laid-open No. 38740/1992) (Ikeda Bussan Co., Ltd.), 02 April 1992 (02.04.1992), fig. 1 (Family: none) | 1–4 |

☒ Further documents are listed in the continuation of Box C.   ☐ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 10 July, 2014 (10.07.14) | 22 July, 2014 (22.07.14) |

| Name and mailing address of the ISA/ | Authorized officer |
|---|---|
| Japanese Patent Office | |
| Facsimile No. | Telephone No. |

Form PCT/ISA/210 (second sheet) (July 2009)

**EP 3 011 870 A1**

**INTERNATIONAL SEARCH REPORT**

| International application No. |
|---|
| PCT/JP2014/066025 |

C (Continuation). DOCUMENTS CONSIDERED TO BE RELEVANT

| Category* | Citation of document, with indication, where appropriate, of the relevant passages | Relevant to claim No. |
|---|---|---|
| A | JP 2005-46425 A  (Inoac Corp.),<br>24 February 2005 (24.02.2005),<br>paragraphs [0017], [0028]; fig. 11<br>(Family: none) | 1-4 |
| A | JP 2004-141649 A  (Takara Belmont Co., Ltd.),<br>20 May 2004 (20.05.2004),<br>entire text; all drawings<br>(Family: none) | 1-4 |
| A | JP 4009490 B2  (TS Tech Co., Ltd.),<br>14 November 2007 (14.11.2007),<br>entire text; all drawings<br>& US 2006/0061190 A1    & EP 1532898 A1<br>& WO 2003/094667 A1    & CN 1652709 A | 1-4 |
| E,A | WO 2013/094666 A1  (Toyo Seat Co., Ltd.),<br>27 June 2013 (27.06.2013),<br>entire text; all drawings<br>(Family: none) | 1-4 |

Form PCT/ISA/210 (continuation of second sheet) (July 2009)

34

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2002028044 A

- JP 4009490 B